# EUROPÄISCHE PATENTANMELDUNG

(11) **EP 3 822 314 A1**
(43) Veröffentlichungstag der Anmeldung: **19.05.2021**
(21) Anmeldenummer: 19209708.7
(22) Anmeldetag: 18.11.2019
(51) Int. Cl.: C08L 27/06, C08L 27/24, C08J 5/04, B32B 5/18, B32B 27/06, B32B 27/20, B32B 27/32

(54) **ZUSAMMENSETZUNG SOWIE DEREN VERWENDUNG ZUR HERSTELLUNG EINER MEHRSCHICHTPLATTE**

(71) Anmelder: Patenta Asia Ltd., Hong Kong (CN)
(72) Erfinder: Schmid, Alexander, 82024 Taufkirchen (DE)
(74) Vertreter: Grünecker Patent- und Rechtsanwälte PartG mbB

(57) **Zusammenfassung**

Die Erfindung betrifft eine Zusammensetzung, umfassend eine Mischung aus C-PVC, PVC und Reisschalenpulver. Weiter betrifft die Erfindung eine Mehrschichtplatte, umfassend eine erste Hautschicht, eine Kernschicht und eine zweite Hautschicht, bestehend aus einer Zusammensetzung umfassend eine Mischung aus C-PVC, PVC und Reisschalenpulver.

## Beschreibung

Die vorliegende Erfindung betrifft eine Zusammensetzung, umfassend eine Mischung aus C-PVC, PVC und Reisschalenpulver. Weiter betrifft die Erfindung eine Mehrschichtplatte, umfassend eine erste Hautschicht, eine Kernschicht und eine zweite Hautschicht.

### Stand der Technik

Im Stand der Technik sind Zusammensetzungen bekannt, die Mischungen aus C-PVC-und PVC-Harzen umfassen. Beispielsweise offenbaren die Schriften CN 1031102631 A und CN 1034506029 A die Verwendung solcher Mischungen zur Herstellung hitzebeständiger Kompositmaterialien. Ähnliches wird in US 2004/015067 A1 offenbart, hier werden modular bestückbare Paneele, aufgebaut aus einer Mischung eines C-PVC-, eines PVC-Harzes und eines Flammschutzmittels, aufgrund ihrer feuerfesten Eigenschaften eingesetzt.

Derartige Paneele werden beispielsweise auch im Außenbereich eingesetzt. Soweit eine flammgeschütze Ausrüstung derartiger Paneele erforderlich ist, werden dicke Schichten mit Flammschutzmitteln vorgesehen.

Ebenfalls bekannt sind Zusammensetzungen, die PVC-Harze und Reis- und/oder Erdnussschalenpulver umfassen, und die beispielsweise in der Herstellung von Holzimitaten zum Einsatz kommen. Diese Zusammensetzungen wurden insbesondere als Ersatz für herkömmliche Holz-Plastik-Komposite (d.h. Wood-Plastic-Composite "WPC") bzw. für HPL-Materialien ("High-Pressure-Komposit") entwickelt. Solche Zusammensetzungen aus PVC-Harz und Reis- und/oder Erdnussschalenpulver sind z.B. in EP 3392296 A1 oder WO 2011/100995 A1 offenbart.

### Aufgabe der Erfindung

Aufgrund der zahlreichen potentiellen Einsatzgebiete der zuvor beschriebenen Komposite besteht nach wie vor Bedarf an Zusammensetzungen, die sowohl modulierbare und den jeweiligen Anforderungen anpassbare Eigenschaften aufweisen, als auch weiterhin die optischen und haptischen Eigenschaften von Echtholz imitieren. Da auch die bekannten Komposite aus PVC und Reisschalenpulver im Außenbereich eingesetzt werden, sind flammgeschützte Varianten von Interesse. Allerdings sind die konventionellen Flammschutzmittel ggf. problematisch im Hinblick auf die Einarbeitung in derartige Komposite, andererseits sind die Flammschutzmittel aufgrund ihrer Chemie häufig mit Beschränkungen im Einsatz und der Verarbeitung behaftet. Also sollten die Einsatzmengen dieser Komponenten vorzugsweise gering sein.

Somit ist es die Aufgabe der Erfindung, eine Zusammensetzung sowie deren Anwendung in einer Mehrschichtplatte bereitzustellen, die modulierbare Eigenschaften wie Temperaturbeständigkeit, Steifigkeit, Vicat-Erweichungspunkt und Schrumpf aufweist und gleichzeitig ein kostengünstiges Holzimitat für die Anwendung im Innen-und Außenbereich darstellt. Gleichzeitig sollen in Ausführungsformen auch flammgeschützte Zusammensetzungen und Laminate bereitgestellt werden, bei denen bevorzugt der Einsatz der Flammschutz- bzw. Flammhemmmittel so gering wie möglich ist.

### Kurze Beschreibung der Erfindung

Diese Aufgabe wird durch die Zusammensetzung nach Anspruch 1 gelöst. Bevorzugte Ausführungsformen der Zusammensetzung sind in den Unteransprüchen 2 bis 5 beschrieben. Zusätzlich wird die Aufgabe durch die Mehrschichtplatte gemäß Anspruch 6 gelöst. Bevorzugte Ausführungsformen der Mehrschichtplatte sind in den Unteransprüchen 7 bis 12 beschrieben. Weiterhin wird eine Mehrschichtplatte gemäß Anspruch 13 zur Verfügung gestellt. Eine Kombination der bevorzugten Ausführungsformen, die in den Unteransprüchen sowie in der Beschreibung offenbart sind, ist erfindungsgemäß umfasst.

Zusätzliche Ausgestaltungen ergeben sich aus der nachfolgenden detaillierten Beschreibung. Diese beschreibt die vorliegende Erfindung besonders im Zusammenhang mit der erfindungsgemäßen Zusammensetzung. Die dort als bevorzugt beschriebenen Ausführungsformen gelten aber auch für die erfindungsgemäße Mehrschichtplatte.

### Detaillierte Beschreibung der Erfindung

Die erfindungsgemäße Zusammensetzung umfasst eine Mischung aus C-PVC, PVC und Reisschalenpulver und kann deswegen als Holzimitat ausgestaltet werden.

In Ausführungsformen umfasst die Zusammensetzung ein Verhältnis von C-PVC zu PVC von 5 - 100% zu 0 - 95%, in bevorzugten Ausführungsformen ein Verhältnis von 15 - 85% zu 85 - 15% und in besonders bevorzugten Ausführungsformen ein Verhältnis von 25 - 75% zu 75 - 25%.

Weiterhin ist der Anteil des Reisschalenpulvers in Ausführungsformen der Zusammensetzung 5 - 40 Gew.-%, in bevorzugten Ausführungsformen 10 - 35 Gew.-% und in besonders bevorzugten Ausführungsformen 15 - 30 Gew.-% der Gesamtmenge.

Die verwendeten Reisschalen unterliegen keinen besonderen Einschränkungen, insbesondere nicht in Bezug auf bestimmte Reissorten. In einer bevorzugten Ausführungsform wird das Reisschalenmaterial über ein herkömmliches Mahlverfahren pulverisiert, gefolgt, soweit notwendig von Siebverfahren zur Gewinnung einzelnen Fraktionen an Partikelgrößen, so dass anschließend, beispielsweise durch Zusammenmischung einzelner Fraktionen die oben genannte erforderliche Partikelgrößenverteilung erzielt wird (wenn der Mahlvorgang selbst schon die gewünschte Verteilung ergibt, können die Siebschritte entfallen. Die Partikel des Reisschalenpulvers können sphärisch oder asphärisch sein. Das Reisschalenpulver kann vor dem Einsatz in der erfindungsgemäßen Zusammensetzung oberflächenbehandelt werden, um eine gute Mischbarkeit mit dem PVC-Harz zu gewährleisten. Insbesondere ist bevorzugt, dass das Reisschalenpulver mit Silan- oder Siloxangruppen oberflächenfunktionalisiert ist. Somit wird eine besonders gute Haftung zum PVC-Harz gewährleistet.

Zusammensetzungen und deren jeweiligen Anteile von PVC-Harz zu Reisschalenpulver sind im Stand der Technik bekannt und sind insbesondere als Holzimitate geeignet. Geeignete Zusammensetzungen sind beispielsweise in der Europäischen Patentanmeldung EP 2 536 785 offenbart. Diese können analog auf die hier offenbarte Zusammensetzung aus C-PVC, PVC und Reisschalenpulver übertragen werden und sind somit hier durch Verweis mit umfasst.

Die erfindungsgemäße Zusammensetzung umfasst bevorzugt 20 - 65 Gew.-% C-PVC/PVC-Harz und 10 - 50 Gew.-% Reisschalenpulver, bezogen auf die Gesamtmenge der Zusammensetzung (alle hier verwendeten Gewichtsangaben beziehen sich auf das Gesamtgewicht der jeweiligen Zusammensetzung).

In bevorzugten Ausführungsformen umfasst die Zusammensetzung 30 - 60 Gew.-%, bevorzugt 40 - 58 Gew.-%, stärker bevorzugt 49 - 55 Gew.-% C-PVC/PVC-Harz. Bevorzugt Mengen an Reisschalenpulver betragen 15 bis 35 Gew.-%, wie 15 bis 25 Gew.-%.

Für das PVC-Harz gibt es keine besonderen Einschränkungen. Insbesondere kann PVC-Neumaterial oder PVC-Recyclingmaterial, bzw. Mischungen davon verwendet werden. Beispielsweise eignet sich ein PVC- Suspensionsharz mit einem K-Wert von 50 - 70. Unter dem K-Wert versteht man eine Zahl, die aus Messungen der Viskosität verdünnter Lösungen eines Polymers berechnet wird und die ein Maß für den Polymerisationsgrad bzw. die Molekülgröße ist. Der K-Wert wird als Harz-Spezifikation verwendet. Der Begriff PVC-Harz bezieht sich auf Homopolymere von Vinylchlorid und auf Copolymere, die durch Polymerisation von Vinylchlorid mit einem oder mehreren Comonomeren, wie z.B. Ethylen, Propylen oder Vinylacetat gebildet werden. Dies gilt auch analog für das erfindungsgemäß einzusetzende C-PVC.

Der Begriff C-PVC benennt dabei PVC Materialien, wie vorstehend beschrieben, die in einem zusätzlichen Modifikationsschritt chloriert wurden, üblicher Weise durch radikalische Reaktionen. Bevorzugt ist dabei der Einsatz eines C-PVCs mit einem Chlorierungsgrad von mehr als 50%, insbesondere mehr als 60%, wie von 60 bis 70%, bevorzugt 65 bis 67%.

In einer Ausführungsform umfasst die Zusammensetzung ausschließlich das C-PVC/PVC-Harz als polymere Komponente, d.h. es sind außer dem PVC-Harz keine weiteren polymeren Komponenten wie z.B. polymere Binder vorhanden. Allerdings kann die Zusammensetzung übliche PVC-Verarbeitungshilfsmittel umfassen, die auch polymer oder oligomer sein können, insbesondere Waches, wie PE Wachse, oder Acrylpolymere.

Die vorliegende Erfindung stellt auch ein Formteil, das aus der oben beschriebenen Zusammensetzung über ein Formgebungsverfahren hergestellt werden kann zur Verfügung. Das Formgebungserfahren unterliegt keinen besonderen Beschränkungen und umfasst bevorzugt Schäumen, (Co)-Extrudieren, Kalandrieren, Spritzgießen oder 3D-Drucken.

Dem Fachmann sind die Einstellung geeigneter Verfahrensbedingungen geläufig. Weiter können beliebige handelsübliche Maschinen für das Formgebungsverfahren eingesetzt werden. Die Bedienung erfolgt nach den Herstellinstruktionen. Dem Fachmann ist klar, dass die erfindungsgemäße Zusammensetzung unter den Verarbeitungsbedingungen (z.B. Temperatur und Druck) ausreichend homogenisiert und verflüssigt werden muss, so dass sie mit den entsprechenden Maschinen verarbeitbar ist. Geeignete Verarbeitungsbedingungen sind entweder die vom Hersteller spezifizierten oder werden vom Fachmann durch einfache Routineversuche ermittelt.

In einer bevorzugten Ausführungsform hat das Formteil die Form einer Platte oder die Form einer Folie. Dabei weist die Platte bzw. die Folie bevorzugt eine Dicke von 3 mm oder weniger, bevorzugt 2 mm oder weniger, bevorzugt 1 mm oder weniger auf. Dies ist erfindungsgemäß insbesondere durch den Einsatz der nachfolgend beschriebenen besonderen Partikelgrößenverteilung des Reisschalenpulvers möglich.

Entsprechende Platten/Folien werden üblicherweise durch Kalandrieren oder (Co)-Extrusion hergestellt. Ein geeignetes Kalandrierungsverfahren für Folien mit einer Dicke von 180 bis 1000 µm ist z.B. in der WO 2016/192846 A1 beschrieben.

Die Zusammensetzung kann auch aufgeschäumt werden. Derartige Schäume weisen bevorzugt eine Dichte von weniger als 1 g/cm³, in Ausführungsformen beträgt die Dichte 0,7 g/cm³ oder weniger, bevorzugt 0,5 g/cm³ oder weniger, wie etwa 0,4 g/cm³ oder 0,3 g/cm³ (gemäß ISO 1183).

Zur Herstellung der Zusammensetzung wird beispielsweise das C-PVC/PVC-Pulver in einem Mischer mit Reisschalenpulver und optional Füllstoff/Additiv (ggf. bei höheren Temperaturen von z.B. 110 - 130°C) vermischt. Anschließend kann z.B. vor der endgültigen Formgebung pelletisiert werden. Zur Formgebung wird die Zusammensetzung bei einer Temperatur im Bereich von beispielsweise 150 - 210°C oder 160 - 175°C geformt. Dabei kann durch Zugabe eines Schaumbildners ein geschäumtes Produkt hergestellt werden.

In einer Ausführungsform erfolgt nach dem Formen der Zusammensetzung eine Oberflächenbehandlung, bevorzugt durch Abbürsten, Abschleifen, Aufrauen, Sandstrahlen, Lackieren, Ölen Lasieren, Bedrucken oder Mischungen davon.

Dabei wird durch das Abbürsten, Abschleifen, Aufrauen oder Sandstrahlen insbesondere die auf der Oberfläche des Formteils gebildete Kunststoffhaut entfernt, wodurch gute ästhetische Oberflächeneigenschaften, wie z.B. eine holzähnliche Haptik und Optik entsteht. Durch die Entfernung der Kunststoffhaut haben die erfindungsgemäßen Formteile auch eine gute Griff- bzw. Rutschfestigkeit.

Beispielsweise kann die Kunststoffhaut durch Abschleifen entfernt werden. Das Abschleifen kann z.B. mit einem Schleifmaterial wie Sand- oder Schleifpapier mit einer Körnung im Bereich von 24 bis 60 durchgeführt werden, beispielsweise unter Verwendung eines elektrisch betriebenen Handschleifers. Bei der Körnung entspricht ein kleinerer Zahlenwert einer gröberen Körnung und ein höherer Zahlenwert einer feineren Körnung. Eine Körnung von 24 ist eher grob und eignet sich z.B. zum Entfernen von Leim- oder Lackschichten, während eine Körnung von 60 eher mittel ist und beispielsweise zum groben Vorschleifen roher Holzflächen verwendet wird. Die geeignete Körnung wählt der Fachmann nach Maßgabe der praktischen Gegebenheiten bzw. des zu erzielenden Effekts.

Die erfindungsgemäßen Formteile können auf ihrer Oberfläche, ggf. nach einer entsprechenden Vorbehandlung (z.B. Grundierung), bedruckt, lackiert, lasiert oder geölt werden. Es hat sich gezeigt, dass durch den Einsatz von C-PVC die Haftung von Farben und Lacken, im Vergleich mit Zusammensetzungen ohne C-PVC, verbessert werden kann. Auch können eine leichte Verklebbarkeit gesichert und antistatische Eigenschaften verbessert werden. Im Gegensatz dazu sind konventionelle Holz/PE-Composite (WPCs) nicht oder nur sehr schwer lackierbar, nicht verklebbar und nicht antistatisch.

Durch ihre Stabilität, Formbeständigkeit und absolute Widerstandsfähigkeit gegenüber Feuchtigkeitseinflüssen wie Regen sind die erfindungsgemäßen Formteile den konventionellen Holz/PE-Compositen (WPCs) und auch vielen Holzarten überlegen. Die erfindungsgemäßen Formteile sind nahezu wasserdicht. Das verwendete PVC / C-PVC ist nicht hygroskopisch und nimmt kein Wasser auf und verhindert so das Eindringen von Wasser bei einer Verletzung der Oberfläche, so dass keine Unterwanderung von aufgetragenen Lackschichten erfolgt und keine Lackabplatzungen auftreten. Der erfindungsgemäßen Formteile sind daher auch dimensionsstabil, so dass eine Verformung auf natürlichem Wege (z.B. durch Aufquellen oder Schwinden) nicht möglich ist. Konventionelle Holz/PE-Composite quellen dagegen unter Feuchtigkeitseinfluss. Lacke haften nicht mehr, weil das eindringende Wasser diese unterwandert und dadurch ablöst.

Der Farbton der erfindungsgemäßen Formteile kann durch Ölen, Bedrucken, Lackieren oder Lasieren eingestellt werden. Je nach Pigmentierung und Oberflächentönung lassen sich verschiedene Holzoptiken und -haptiken realisieren, z.B. von Tropenholz wie Burma Teak, Siam Teak, Java Teak oder Aged Teak.

Die verwendeten Reisschalen unterliegen keinen besonderen Einschränkungen, insbesondere nicht in Bezug auf bestimmte Reissorten. In einer bevorzugten Ausführungsform wird das Schalenmaterial über ein herkömmliches Mahlverfahren pulverisiert, gefolgt, soweit notwendig von Siebverfahren zur Gewinnung einzelnen Fraktionen an Partikelgrößen. Das erfindungsgemäß einzusetzende Reis- und/oder Erdnussschalenpulver besitzt insbesondere eine Partikelgröße von 0,42 - 0,10 mm (40 - 140 mesh).

Allerdings können auch andere Arten an Reisschalenpulver eingesetzt werden (im Hinblick auf die Partikelgrößenverteilung). Besonders in Bezug auf die durch die vorliegenden Erfindung zur Verfügung gestellte Mehrschichtplatte können unterschiedliche Zusammensetzungen für die einzelnen Schichten (Hautschichten und Kernschicht) verwendet werden. Diese können sich im Hinblick auf das Reisschalenpulver unterscheiden, im Hinblick auf den Einsatz zusätzlicher Komponenten (wie Flammschutzmittel), im Hinblick auf die Struktur (wie geschäumt oder nicht geschäumt) etc. Im Hinblick auf die Kernschicht, die bevorzugt geschäumt ausgestaltet ist, kann es vorteilhaft sein, die nachfolgend beschriebene besondere Partikelgrößenverteilung des Reisschalenpulvers einzusetzen. Allerdings kann es auch sinnvoll sein, diese Art des Reisschalenpulvers für die Hautschichten einzusetzen, da so auch qualitativ hochwertige dünne Schichten erhalten werden können.

Dieses besondere Reisschalenpulver weist die folgende Partikelgrößenverteilung auf: 40 - 70 Gew.-% des Reisschalenpulvers besitzen eine Partikelgröße im Bereich von <150 µm (>100 mesh) und 30 - 60 Gew.-% des Reisschalenpulvers besitzen eine Partikelgröße im Bereich von 249 - 150 µm (100 mesh). Dabei bedeuten die vorstehend genannten Partikelgrößen, sowie die nachfolgend beschriebenen bevorzugten Partikelgrößen und Partikelgrößenverteilungen, dass die genannten Fraktionen durch Siebprozesse bestimmt sowie isoliert werden können. Die Fraktion mit der Partikelgröße 249 - 150 µm (100 mesh) bedeutet, dass die Partikel ein Sieb der Siebweite 100 mesh nicht passieren (s.u.).

Die Partikelgröße und Partikelgrößenverteilung wird durch ein Siebverfahren bestimmt, bei dem eine Siebvorrichtung der Firma Filtra, Model "Iris FTL-0200" verwendet wird (Geräteeinstellungen: Power: 5; Cycle: 0, Timer: 10 min.). Die Probemenge ist 100g, genommen mindestens ca. 20 cm von der Oberfläche des Gebindes entfernt. Die Messung wird 3 Mal wiederholt. Das Ergebnis entspricht dem arithmetischen Mittel der drei Messwerte. Die verwendeten Siebe sind wie folgt: 40 mesh (>425 µm), 45 mesh (355 - 425 µm), 60 mesh (250 - 354 µm), 100 mesh (150 - 249 µm), der verbleibende Rest wird als Partikelgröße >100 mesh (<150µm) definiert. Die Bezeichnung "mesh" bezeichnet die Maschenweite der Siebe gemäß "US Standard Sieve". Je kleiner der mesh-Wert, desto größer ist die Partikelgröße.

In einer bevorzugten Ausgestaltung ist die Zusammensetzung des Reisschalenpulvers so, dass 40 - 60 Gew.-% des Reisschalenpulvers eine Partikelgröße im Bereich von <150 µm (>100 mesh) und 40 - 60 Gew.-% des Reisschalenpulvers eine Partikelgröße im Bereich von 249 - 150 µm (100 mesh) besitzen. Es ist ebenfalls bevorzugt, dass 20 Gew.-% oder weniger, insbesondere 10 Gew.-% oder weniger, des Reisschalenpulvers eine Partikelgröße im Bereich von 250 µm oder größer (<100mesh) besitzen.

In Ausführungsformen ist die Zusammensetzung des Reisschalenpulvers so gewählt, dass 40 - 50 Gew.-% des Reisschalenpulvers eine Partikelgröße im Bereich von <150 µm (> 100 mesh), 40- 50 Gew.-% des Reisschalenpulvers eine Partikelgröße im Bereich von 249 - 150 µm (100 mesh), weniger als 15 Gew.-% des Reisschalenpulvers eine Partikelgröße im Bereich von 354 - 250 µm (60 mesh), weniger als 3 Gew.-% des Reisschalenpulvers eine Partikelgröße im Bereich von 424 - 355 µm (45 mesh), und weniger als 1 Gew.-% des Reisschalenpulvers eine Partikelgröße im Bereich von größer als 425 µm (40 mesh) besitzen.

Durch ein Reisschalenpulver mir einer solchen spezifischen Partikelgrößenverteilung ist es überraschenderweise möglich, trotz einer relativ kleinen Partikelgröße eine gute Verarbeitbarkeit bei einem Formgebungsprozess zu gewährleisten. Gleichzeitig ist eine hohe Homogenität des Werkstoffs realisierbar. Dadurch sind gute ästhetische Oberflächeneigenschaften, wie das optische und haptische Erscheinungsbild, und mechanische Eigenschaften erzielbar, insbesondere auch bei der Herstellung von Platten oder Folien oder Hautschichten bei einer Mehrschichtplatte mit einer geringen Schichtdicke von 3 mm oder weniger, oder bei der Herstellung von geschäumten Formteilen. Die verbesserten ästhetischen Oberflächeneigenschaften sind z.B. eine holzähnliche Optik und Haptik. Die verbesserte Homogenität wird durch eine verringerte Segregationsneigung erzielt und äußert sich z.B. in verbesserten mechanischen Eigenschaften, wie z.B. hervorragenden Werten für die Parameter Zugfestigkeit, Zug-E-Modul, Biegefestigkeit, Biege-E-Modul, Wärmeformbeständigkeit, hohen Werten für die Vicat-Erweichungstemperatur, einem verbesserten Schraubenabzugswert und einer verbesserten IZOD Schlagzähigkeit (gekerbt). Weiter wird eine hervorragende thermische Längenausdehnung, ein hoher Wasserdampfdiffusionswiderstand und eine geringe Wasseraufnahme realisiert. Insbesondere ist hier hervorzuheben, dass die Formteile gemäß dem oben beschriebenen Stand der Technik Reisschalenpulver umfassen, das nicht die spezifische Partikelgrößenverteilung gemäß der erfindungsgemäßen Zusammensetzung besitzt, und so insbesondere bei geschäumten Formteilen oder Folien bzw. plattenartigen Formteilen mit einer geringen Schichtdicke schlechtere Eigenschaften resultieren. Wird die Zusammensetzung mit Flammschutzmitteln ausgerüstet, ergibt sich auch eine ausgezeichnete flammhemmende Wirkung.

Die Partikel des Reisschalenpulvers können sphärisch oder asphärisch sein. Das Pulver kann vor dem Einsatz in der erfindungsgemäßen Zusammensetzung oberflächenbehandelt werden, um eine gute Mischbarkeit mit dem C-PVC/PVC-Harz zu gewährleisten. Insbesondere ist bevorzugt, dass das Reisschalenpulver mit Silan- oder Siloxangruppen oberflächenfunktionalisiert ist. Somit wird eine besonders gute Haftung zum C-PVC/PVC-Harz gewährleistet.

Die Zusammensetzung kann zusätzliche weitere Komponenten enthalten. In Ausführungsformen umfasst die Zusammensetzung einen oder mehrere anorganische Füllstoffe. Die anorganischen Füllstoffe sind bevorzugt ausgewählt aus der Gruppe, umfassend Kalziumcarbonat, Talk, Glimmer, Tonerde, Kaolin, Silikat oder Titanoxid, oder Mischungen davon. Insbesondere sind Kalziumcarbonat und Talk bevorzugt. Bevorzugt sind die anorganischen Füllstoffe in der Zusammensetzung in einer Menge von 0 - 45 Gew.-%, weiter bevorzugt in 5 - 40 Gew.-%, mehr bevorzugt in 10 - 30 Gew.-%, bezogen auf die Gesamtmenge der Zusammensetzung, enthalten.

In Ausführungsformen sind dies bevorzugt mineralische Füllstoffe, die in Mengen von 10 - 50 Gew.-%, bevorzugt 20 bis 45 Gew.-% und besonders bevorzugt 30 - 40 Gew.-% eingesetzt werden können. CaCO₃ und Talk sind als Füllstoff bevorzugt.

Wird die Zusammensetzung zur Herstellung der hier beschriebenen Mehrschichtplatte verwendet, so ist bevorzugt der Anteil an Füllstoff in den kernschichten höher als in den Hautschichten.

Die Zusammensetzung enthält in Ausführungsformen ein oder mehrere Additive, ggf. zusätzlich zu den anorganischen Füllstoffen. Diese Additive sind bevorzugt ausgewählt aus der Gruppe, umfassend polymere Binder, bevorzugt auf Thermoplastkunststoffbasis, Farbstoffe und/oder Pigmente, Gleit/Schmiermittel, PVC-Verarbeitungsmittel, wie Weichmacher, Schaumbildner, UV-Stabilisatoren, thermische Stabilisatoren, Brandschutzmittel, oder Mischungen davon. Die Additive sind bevorzugt in Mengen von 0 - 30 Gew.-%, weiter bevorzugt in 5 - 25 Gew.-%, mehr bevorzugt in 10 - 20 Gew.-%, bezogen auf die Gesamtmenge der Zusammensetzung, enthalten.

Der polymere Binder besitzt beispielsweise die Funktion, Feuchtigkeit oder Lösungsmittel zu binden. Bevorzugt werden Polymere aus Acrylaten und/oder Methacrylaten verwendet. Farbpigmente sind z.B. Kreide, Titandioxid, Rußschwarz, rotes Eisenoxid oder Ocker. Schmier/Gleitmittel sind z.B. Fettsäuresalze wie Calciumstearat, Fettsäureester, Fettsäureamide, Paraffinwachse, Polyethylenwachse oder mikrokristallines Parafin. PVC-Verarbeitungsmittel (wie z.B. Wärme- und Witterungsstabilisatoren, Antioxidantien, Alterungsschutzmittel, Lichtstabilisatoren, Ultraviolettabsorber, Antistatikmittel) sind dem Fachmann bekannt und im Handel in großer Auswahl verfügbar. Insbesondere werden z.B. Polyethylen oder chloriertes Polyethylen als PVC Weichmacher verwendet. Als Schaumbildner (bzw. Aufschäumer) können herkömmliche Schaumbildner eingesetzt werden, die keinen besonderen Beschränkungen unterliegen. Insbesondere sind chemische oder physikalische Schaumbildner einsetzbar. Physikalische Schaumbildner sind z.B. Tenside oder andere grenzflächenaktive Stoffe, die neben der Grenzflächenaktivität auch ein gewisses Filmbildungsvermögen besitzen, und so die Bildung von Schaumflüssigkeiten durch Einblasen von Gas fördern. Bei chemischen Schaumbildnern beruht die Schaumbildung auf einer chemischen Reaktion, die unter Gasentwicklung abläuft. Beispiele sind Polyurethan-basierte Schaumbildner oder Azodicarbonamid-basierte Schaumbildner. Die zuzusetzende Menge ergibt sich aus den Herstellerinstruktionen und wird vom Fachmann durch einfache Routineversuche bestimmt. Durch die Menge des Schaumbildners kann die resultierende Dichte des geschäumten Werkstoffs eingestellt werden.

PVC-Verarbeitungshilfsmittel ("PVC processing aids") können die Verschmelzung ("Fusion") beschleunigen, die Schmelzstärke bw. Zähigkeit der Schmelze ("melt strength") verbessern, Oberflächendefekte eliminieren und das "plate out" verringern. Außerdem können sie im Produktionsprozess die Metallablösungseigenschaften verstärken. Geeignete Binder und Verarbeitungshilfsmittel sind dem Fachmann auf dem Gebiet der PVC-Verarbeitung geläufig und im Handel in großer Auswahl verfügbar.

In bevorzugten Ausführungsformen enthält die Zusammensetzung zusätzlich Flammschutzmittel, wie 10 - 20 Gew.-% Al(OH)₃, 5 - 10 Gew.-% Sb₂O₃ und/oder 0,1 - 5% Zinkborat, bezogen auf die Gesamtmenge der Zusammensetzung. Dies ist besonders bevorzugt, wenn die Zusammensetzung eingesetzt wird, um eine (oder beide) Hautschichten der Mehrschichtplatten zu ergeben. Es hat sich überraschend gezeigt, dass eine derartig dünne, flammwidrig ausgerüstete Hautschicht ausreichend ist, um eine gute Flammhemmung zu erzeugen. Es ist daher nicht notwendig, beispielsweise auch die Kernschicht mit derartigen Additiven auszustatten. Dies verringert drastisch den Bedarf an Flammschutzmitteln, ohne Einbuße an Flammhemmung.

Soll die Zusammensetzung geschäumt werden, so können erfindungsgemäß die bekannten Systeme eingesetzt werden. Geeignet sind insbesondere 0,1 - 5 Gew.-% Schaumbildner, 5 - 10 Gew.-% Gleitmittel und 5 - 15% Acrylate als Additive.

Die erfindungsgemäße Mehrschichtplatte umfasst die folgenden Schichten: eine erste Hautschicht (HS1), eine zweite Hautschicht (HS2), sowie eine dazwischenliegende geschäumte Kernschicht (KS). Mindestens eine der Hautschichten umfasst die hier beschriebene Zusammensetzung mit C-PVC (C-PVC-Z). Bevorzugt umfasst die Kernschicht eine Zusammensetzung aus PVC und Reisschalenpulver ohne C-PVC (PVC-Z), so dass der Einsatz der kostenintensiveren C-PVC Komponente auf die dünne Hautschicht beschränkt werden kann. Allerdings kann auch die Kernschicht aus der hier beschriebenen Zusammensetzung mit C-PVC hergestellt werden. Erfindungsgemäß sind also insbesondere folgende Schichtabfolgen denkbar (Kürzel der Schicht: eingesetzte Zusammensetzung):
- (HS1 : C-PVC-Z) / (KS : PVC-Z) / (HS2 : PVC-Z)
- (HS1 : C-PVC-Z) / (KS : PVC-Z) / (HS2 : C-PVC-Z)
- (HS1 : C-PVC-Z) / (KS : C-PVC-Z) / (HS2 : PVC-Z)
- (HS1 : C-PVC-Z) / (KS : C-PVC-Z) / (HS2 : C-PVC-Z)

Dabei können die in den einzelnen Schichten eingesetzten Zusammensetzungen der gleichen Art (also C-PVC-Z bzw. PVC-Z) sich aber im Hinblick auf die eingesetzten Materialien unterscheiden, also z.B. im Hinblick auf die Menge an Reisschalenpulver und/oder Füllstoffen, Anteil an C-PVC, Partikelgrößenverteilung des Reisschalenpulvers, Ausrüstung mit Flammschutzmitteln, etc.

In einer weiteren Ausführungsform, für die aber die hier gemachten Ausführungen im Hinblick auf die Materialien, deren Mengen sowie die Schichtausgestaltung (nachfolgend diskutiert) gelten, wird eine Mehrschichtplatte bereitgestellt, die die folgenden Schichten aufweist: eine erste Hautschicht, eine zweite Hautschicht, sowie eine dazwischenliegende geschäumte Kernschicht, wobei mindestens eine der Hautschichten eine Zusammensetzung aus PVC und Reisschalenpulver umfasst, die zusätzlich Flammschutzmittel enthält. Bevorzugt umfasst die Kernschicht eine Zusammensetzung aus PVC und Reisschalenpulver ohne Flammschutzmittel, so dass der Einsatz der kostenintensiveren Flammschutzmittel auf die dünne Hautschicht beschränkt werden kann.

Die Mehrschichtplatte wird durch Co-Extrusion der jeweiligen Zusammensetzungen hergestellt. Dieses Verfahren ist hinlänglich im Stand der Technik bekannt.

Die Rezepturen für die Hautschichten als auch für die Kernschicht können gleich oder verschieden sein.

In Ausführungsformen der Mehrschichtplatte weisen die beiden Hautschichten jeweils eine Dicke von 0,3 - 2,5 mm, bevorzugt 0,5 - 2 mm und besonders bevorzugt 0,7 - 1,5 mm auf und die Kernschicht eine Dicke von 5 - 25 mm, bevorzugt 7 - 23 mm und besonders bevorzugt 10 - 20 mm.

In Ausführungsformen der Mehrschichtplatte beträgt die Dichte der Kernschicht 0,25 - 0,9 g/cm³, bevorzugt 0,35 - 0,8 g/cm³ und besonders bevorzugt 0,45 - 0,7 g/cm³.

Je nach Verhältnis der Abmischung C-PVC/PVC/Reisschalenpulver in den einzelnen Schichten der Mehrschichtplatte lassen sich Eigenschaften, wie Vicat-Erweichungspunkt, Schrumpf, Biegemodul bzw. Steifigkeit, Temperaturbeständigkeit gegen Verformen, sowie Wärmefreisetzung und Rauchentwicklung bei Durchführung des SBI-Tests (SBI: Single Burning Item) modulieren. Je nach Bedarf lassen sich durch das Co-Extrusionskonzept Eigenschaften in derartigen Schichtsystemen unterschiedlich einstellen. Auch die Dicke der verschiedenen Schichten lässt sich flexibel gestalten.

### Beispiele

In einem Beispiel wird eine erfindungsgemäße Mehrschichtplatte aus einer Kernschicht (57 Gew.-% PVC; 18 Gew.-% Reisschalenpulver) mit einer Dicke von 14 mm und einer Dichte von 0,65 g/cm³ und zwei Hautschichten mit einer Dicke von jeweils 1 mm hergestellt. Die Hautschichten umfassten 57 Gew.-% C-PVC/PVC bei einem Verhältnis von C-PVC zu PVC von 70% zu 30%, und einen Anteil an Reisschalenpulver von 18 Gew.-%. Im Vergleich mit der Kernschicht ohne Hautschichten wird eine Erhöhung der Biegefestigkeit von 35% erzielt.

In weiteren Ausführungsbeispielen der erfindungsgemäßen Mehrschichtplatte aus einer Kernschicht mit einer Dicke von 14 mm und einer Dichte von 0,65 g/cm³ und zwei Hautschichten mit einer Dicke von jeweils 1 mm wird das Verhältnis von C-PVC zu PVC in den Hautschichten variiert und der Einfluss auf das Elastizitätsmodul gemessen. Die erhaltenen Messwerte sind in Tabelle 1 festgehalten.

**Tabelle 1: Gemessenes Elastizitätsmodul für verschiedene C-PVC/PVC-Verhältnisse in der Zusammensetzung der Hautschichten der erfindungsgemäßen Mehrschichtplatte.**

| | Verhältnis C-PVC zu PVC [Gew.-%] | | | |
|---|---|---|---|---|
| | 0 : 100 | 15 : 85 | 30 : 70 | 50 : 50 |
| Elastizitätsmodul [MPa] | 3550 | 3680 | 3680 | 3840 |

In weiteren Ausführungsbeispielen der erfindungsgemäßen Mehrschichtplatte aus einer Kernschicht mit einer Dicke von 14 mm und einer Dichte von 0,65 g/cm³ und zwei Hautschichten mit einer Dicke von jeweils 1 mm wird das Verhältnis von C-PVC zu PVC in den Hautschichten variiert und der Einfluss auf den Vicat-Erweichungspunkt gemessen. Die erhaltenen Messwerte sind in Tabelle 2 festgehalten.

**Tabelle 2: Gemessener Vicat-Erweichungspunkt für verschiedene C-PVC/PVC-Verhältnisse in der Zusammensetzung der Hautschichten der erfindungsgemäßen Mehrschichtplatte.**

| | Verhältnis C-PVC zu PVC [Gew.-%] | | | | | |
|---|---|---|---|---|---|---|
| | 0 : 100 | 20 : 80 | 40 : 60 | 60 : 40 | 80 : 20 | 100 : 0 |
| Vicat-Erweichungspunkt [°C], unter einer Belastung von 5 kg | 73 | 77 | 80 | 84 | 88 | 92 |

## Patentansprüche

1. Zusammensetzung, umfassend eine Mischung aus C-PVC, PVC und Reisschalenpulver.

2. Zusammensetzung nach Anspruch 1,
wobei das Verhältnis von C-PVC zu PVC 5 - 100% zu 0 - 95%, bevorzugt 15 - 85% zu 85 - 15% und besonders bevorzugt 25 - 75% zu 75 - 25% beträgt und der Anteil des Reisschalenpulvers 5 - 40 Gew.-%, bevorzugt 10 - 35 Gew.-% und besonders bevorzugt 15 - 30 Gew.-% der Gesamtmenge beträgt.

3. Zusammensetzung nach Anspruch 1 oder 2,
wobei die Zusammensetzung 20 - 60 Gew.-%, bevorzugt 38 - 60 Gew.-%, mehr bevorzugt 40 - 58 Gew.-% und besonders bevorzugt 49 - 55 Gew.-% C-PVC/PVC-Harz, und 10 - 50 Gew.-% Reisschalenpulver umfasst.

4. Zusammensetzung nach einem der Ansprüche 1 bis 3,
wobei die Mischung zusätzlich einen Füllstoff umfasst, bevorzugt einen mineralischen Füllstoff, insbesondere bevorzugt CaCO3 und/oder Talk;
und der Anteil an Füllstoff bis zu 60 Gew.-%, bevorzugt 10 - 50 Gew.-% und besonders bevorzugt 20 - 40 Gew.-% beträgt.

5. Zusammensetzung nach einem der Ansprüche 1 bis 4,
wobei die Mischung zusätzlich mindestens ein Flammschutzmittel umfasst, bevorzugt ausgewählt unter 10 - 20 Gew.-% Al(OH)₃, 5 - 10 Gew.-% Sb₂O₃ und/oder 0,1 - 5% Zinkborat.

6. Mehrschichtplatte, umfassend:
eine erste Hautschicht;
eine zweite Hautschicht; und
eine geschäumte Kernschicht zwischen der ersten Hautschicht und der zweiten Hautschicht;
wobei mindestens eine der Hautschichten die Zusammensetzung nach einem der Ansprüche 1 bis 5 enthält.

7. Mehrschichtplatte nach Anspruch 6,
wobei die geschäumte Kernschicht PVC und Reisschalenpulver enthält.

8. Mehrschichtplatte nach Anspruch 6 oder 7,
wobei beide Hautschichten die Zusammensetzung nach einem der Ansprüche 1 bis 5 enthalten.

9. Mehrschichtplatte nach einem der Ansprüche 6 bis 8,
wobei mindestens eine der Hautschichten weiterhin ein Flammschutzmittel enthält

10. Mehrschichtplatte nach Anspruch 9,
wobei mindestens eine der Hautschichten als Flammschutzmittel 10 - 20 Gew.-% Al(OH)₃, 5 - 10 Gew.-% Sb₂O₃ und/oder 0,1 - 5% Zinkborat enthält.

11. Mehrschichtplatte nach einem der Ansprüche 6 bis 10,
wobei die Dichte der Kernschicht 0,25 - 0,9 g/cm³, bevorzugt 0,35 - 0,8 g/cm³ und besonders bevorzugt 0,45 - 0,7 g/cm³ beträgt.

12. Mehrschichtplatte nach einem der Ansprüche 6 bis 11,
wobei die beiden Hautschichten jeweils, unabhängig voneinander eine Dicke von 0,3 - 2,5 mm, bevorzugt 0,5 - 2 mm und besonders bevorzugt 0,7 - 1,5 mm aufweisen und die Kernschicht eine Dicke von 5 - 25 mm, bevorzugt 7 - 23 mm und besonders bevorzugt 10 - 20 mm aufweist.

13. Mehrschichtplatte, umfassend:
eine erste Hautschicht;
eine zweite Hautschicht; und
eine geschäumte Kernschicht zwischen der ersten Hautschicht und der zweiten Hautschicht;
jeweils enthaltend PVC und Reisschalenpulver;
wobei mindestens eine der Hautschichten zusätzlich ein Flammschutzmittel umfasst.
